Europäisches Patentamt

(19) European Patent Office

Office européen des brevets

(11) Publication number: **0 103 439**
**B1**

(12) EUROPEAN PATENT SPECIFICATION

(45) Date of publication of patent specification: **01.10.86**

(51) Int. Cl.⁴: **B 21 C 37/15,** F 16 L 9/18, E 21 B 36/00

(21) Application number: **83305016.4**

(22) Date of filing: **31.08.83**

(54) Methods of prestressing and methods of manufacturing tubular apparatus.

(30) Priority: **31.08.82 US 413284**

(43) Date of publication of application:
**21.03.84 Bulletin 84/12**

(45) Publication of the grant of the patent:
**01.10.86 Bulletin 86/40**

(84) Designated Contracting States:
**AT BE CH DE FR GB IT LI LU NL SE**

(56) References cited:
**DE-B-1 258 215**
**DE-B-1 583 992**
**US-A-2 693 026**
**US-A-2 924 245**
**US-A-3 397 745**
**US-A-3 511 282**
**US-A-3 574 357**

(73) Proprietor: **THE BABCOCK & WILCOX COMPANY**
**1010 Common Street P.O. Box 60035**
**New Orleans Louisiana 70160 (US)**

(72) Inventor: **Holbrook, Richard L.**
**616 Weeburn Way**
**Louisville Ohio 44641 (US)**
Inventor: **Mayer, Dean L.**
**11575 Taylor Street**
**Northeast Alliance Ohio 44601 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to methods of manufacturing and methods of prestressing tubular apparatus (for example elongated conduits for conveying hot or cold fluid) having at least one inner tube and an outer tube.

Heavy oil and tar sands represent huge untapped resources of liquid hydrocarbons which will be produced in increasing quantities to help supplement declining production of conventional crude oil. These deposits must, however, be heated to reduce the oil viscosity before it will flow to the producing wells in economical quantities. The dominant method of heating is by injection of surface generated steam in either a continuous (steam flood) or intermittent (steam stimulation or "huff and puff") mode.

When steam is injected down long injection pipes or "strings", a significant amount of thermal energy is lost to the rock overburden (50 to 2130 m or 500 to 7000 feet) which covers the oil deposit. In the initial steam injection projects, the price of oil did not justify the prevention of this heat loss, but now with the price of oil at $30.00 or more a barrel, insulation systems for the well injection pipe have become economically justified.

Thermally insulated tubular structures having at least one inner tube and an outer tube are known and used, for example, as insulated steam injection tubing in oil wells, or in pipelines for carrying fluids at elevated temperatures. Such piping is disclosed, for example, in US Patent No. 3 574 357 to Alexandru et al and US Patent No. 3 397 745 to Owens et al.

It is common practice for such tubes to be prestressed in order to compensate for differential expansion of the inner and outer coaxial walls or tubes. Such prestressing is done, for example, by elongating the inner tube through such means as heating or mechanically stretching, and attaching the outer tube while the inner tube is in such a prestressed state. While still held in the prestressed state, any heat treatment required for the attachment is completed. After cool down from the heat treatment, the heating or mechanical stretching is removed and the tubes assume a state of tensile prestress on the inner tube and compressive prestress on the outer tube. While in service carrying a hot fluid, the inner tube becomes hot and expands. This relaxes the tensile prestress before the inner tubes goes into compression. In this manner, the inner tube is prevented from buckling.

An example of a method of prestressing a tubular apparatus in which an inner tube is elongated by heating and, while heated, is secured to an outer tube, is disclosed in US Patent No. US—A—2 924 245. A similar example, in which the inner tube is elongated by heating or by mechanical stretching, is disclosed in US Patent No. US—A—3 511 282.

In an analogous fashion, where the inner tube is designed to convey cold fluids, the outer tube is heated or mechanically stretched before the inner tube is connected thereto.

A disadvantage of these prior approaches to prestressing double walled tubes or conduits is that the inner, outer, or both tubes must be held in their compressed or stretched state while other manufacturing steps, such as the connection of the tubes, the heat treatment thereof, and the cool down from the heat treatment, are accomplished.

According to the invention there is provided a method of prestressing a tubular apparatus having at least one inner tube positioned within an outer tube and connected to the outer tube at at least two spaced locations along the length of the tubular apparatus, the method comprising reducing the diameter of the outer tube so as permanently to elongate the outer tube while elastically stressing the inner tube whereby a tensile prestress is applied to the inner tube and a compressive prestress is applied to the outer tube.

The invention also provides a method of manufacturing a tubular apparatus having prestressed inner and outer tubes, the method comprising:

positioning the inner tube within the outer tube;

connecting the inner tube to the outer tube at at least two spaced locations along the length of the inner and outer tubes; and

mechanically reducing an outer diameter of the outer tube so as permanently to elongate the outer tube while elastically stressing the inner tube whereby the inner tube is prestressed with respect to the outer tube.

Further, the invention provides a method of manufacturing a prestressed tubular apparatus having at least one inner tube positioned within an outer tube, the method comprising connecting the inner tube to the outer tube at at least two locations spaced along the length of the tubes, and, while the tubes are connected, permanently elongating the inner tube while elastically stressing the outer tube whereby a compressive prestress is applied to the inner tube and a tensile prestress is applied to the outer tube.

Additionally, the invention provides a method of prestressing a tubular apparatus having at least one inner tube positioned within an outer tube and connected to the outer tube at at least two locations spaced along the length of the tubular apparatus, the method comprising increasing the diameter of the inner tube so as permanently to shorten the inner tube whereby a tensile prestress is applied to the inner tube and a compressive prestress is applied to the outer tube.

A preferred embodiment of the present invention described hereinbelow provides a method of prestressing tubular apparatus during a manufacturing sequence therefor. Inner and outer coaxial tubes of the tubular apparatus are first joined to each other, and the joints as well as the remainder of the assembly are heat-treated as required with no prestress applied. After these steps, the assembly is placed in a cold metal working machine such as a drawbench, roll extrusion machine or tube reducer, and the diameter of the outer tube is reduced to thereby elongate the outer tube along at least a part of its length. Only a small amount of elongation is sufficient to stretch the inner tube to a desired prestress level. Prestressing is applied to the assembly in a convenient manner after all previous complex manufacturing steps are accomplished. Time-consuming and costly hold-ups in the manufacturing sequence according to the prior art are thus avoided or at least alleviated.

The invention will now be further described, by way of illustrative and non-limiting example, with reference to the accompanying drawing, in which:

Figure 1 is a side sectional view of a double walled tube or tubular apparatus to which prestressing is to be applied;

Figure 2 is a perspective view of a roll extrusion machine that can be used for reducing the diameter of the outer wall or tube of the tubular apparatus;

Figure 3 is a view similar to Figure 2, showing the tubular apparatus within the extrusion machine;

Figure 4 is a perspective view showing the use of a drawbench for elongating the outer tube; and

Figure 5 is a perspective view of a different roller arrangement for reducing the diameter of the outer tube.

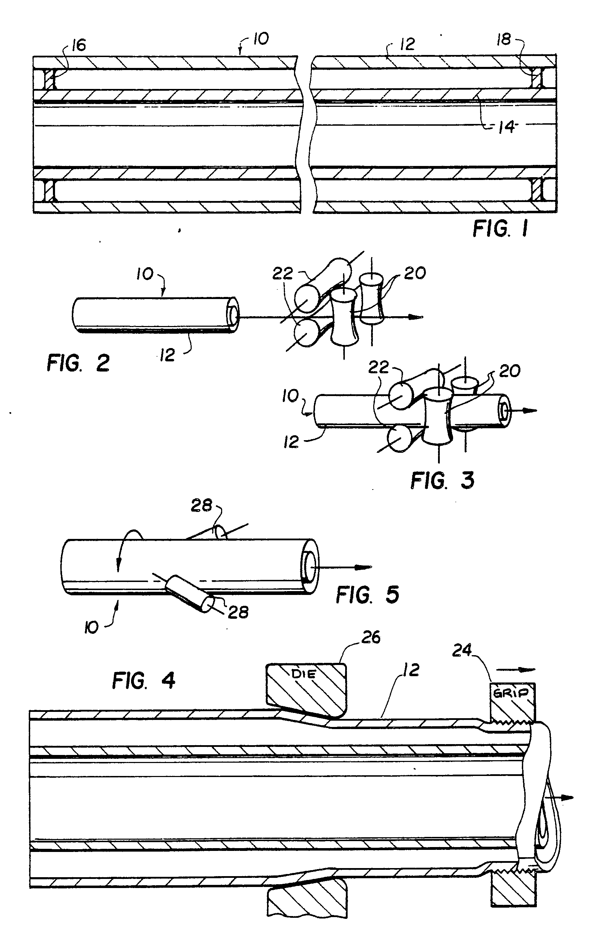

A method embodying the invention for manufacturing and prestressing a tubular apparatus or double-walled tube generally designated 10 in Figure 1 will now be described with reference to the drawing. The tubular apparatus 10 comprises an outer wall, tube portion or tube 12 and an inner wall, tube portion or tube 14 which are coaxially disposed with respect to each other and fixed to each other by welded or otherwise interconnected joints 16 and 18, which are connected between the inner and outer tubes at spaced locations along the length thereof, preferably at their ends.

The inner tube 14 is capable of conveying high temperature fluid, such as steam. The tubular apparatus 10 can, for example, be a single string length of an insulated steam injection tube used for extracting oil from an oil well using steam.

After the inner and outer tubes 14, 12 are connected to each other by joints 16, 18, after which the assembly may be heat-treated or otherwise processed, the diameter of the outer tube 12 is reduced. This simultaneously causes elongation of the outer tube 12. This permanent elongation establishes a prestress condition within the assembly whereby the inner tube 14 receives a tensile prestress and the outer tube 12 receives a compressive prestress.

As shown in Figures 2 and 3, diameter reduction can be accomplished by extrusion rollers 20 and 22 which have concave surfaces and are positioned on perpendicularly extending axes so that the entire outer surface of the outer tube 12 is compressed evenly.

Alternatively, as shown in Figure 4, the outer diameter can be reduced by elongating the outer tube 12 in a drawbench having jaws or grips 24 that receive a force to pull the tube 12 through the die portion 26 in the direction indicated by arrows.

A still further way of elongating the outer tube 12 is by rolling it, in a direction indicated by an arrow in Figure 5, between rollers 28 which are on axes extending at an angle to the major axis of the tube 12 so that, with rotation of the tube, the tube is also moved axially between the rollers 28. Other satisfactory methods for reducing the diameter, such as roll sinking and swaging are possible.

It is noted that diameter reduction should take place only between the joints 16, 18, rather than over the joints.

It is also possible to increase the diameter of the inner tube 14 for shortening it for prestressing purposes.

It is important that sufficient stress be applied radially to the outer tube 12 when the outer tube is to be elongated, to go past the yield point of the material of the outer tube. This may require a large diameter reduction over only a small portion of the tube 12. In other words, if insufficient stress is applied to the outer tube 12 during diameter reduction, the tube will simply bounce back to approximately its original shape. It is also desirable to strain gauge the inner tube 14 so as to cease diameter reduction of the outer tube 12 when the stress on the inner tube 14 rises to a predetermined amount.

An advantage of the present method resides in the fact that, although the tubes and connecting members may be treated prior to prestressing, it is difficult to heat treat the welds if the tubular apparatus is under stress. The stress would have to be maintained on the tubes during such heat treatment since the heat would otherwise cause the welds to have insufficient strength to hold. For this reason it is considered likely that there is a tendency in the industry not to heat treat the welds under the conventional process of connecting the tubes after prestressing them. In such a case the welds are more brittle, more damage prone and more corrosion prone.

Diameter reduction, for the purposes of permanently elongating a tube, is discussed in *Theory of Plasticity*, Hoffman and Sachs, McGraw Hill, pages 252 to 257 and *Mathematical Theory of Plasticity*, R. Hill, Oxford University Press, pages 269 to 272.

An example of a method embodying the invention utilises an outer tube which is swaged over a length of 2.54 m (100 in) from an original outer diameter of 114.3 mm (4.5 in) to a final outer diameter of 113.27 mm (4.4596 in). During this swaging the wall thickness increases from 6.88 mm (0.271 in) to 6.92 mm (0.2726 in). This provides an elongation of the tubular apparatus of 10.2 mm (0.4 in) or from an original length of 12.1920 m (40 ft) to a final length of 12.2022 m (40 ft, 0.4 in). The resulting prestress is 172.4 MPa (25 klbf/in$^2$ or "KSI") on the inner tube 14 and 86.7 MPa (12.58 KSI) on the outer tube 12. The discrepancy in force is due to the larger area of the outer tube 12 with respect to the inner tube 14.

The stress required to lengthen the inner tube 14 has a bearing on whether or not such stress is required to permanently elongate the outer tube 12. For example, at some level of the inner tube strength, the stress required to elongate the inner tube 14 may be so great that the diameter reduction, instead of making the outer tube 12 both thicker and longer as in this example, will instead just cause a thickness increase without any lengthening of the tube. The amount of diameter decrease of the outer tube 12 thus must be selected carefully.

Concerning other features of the structure used in conjunction with the present method, the annular space between the inner tube 14 and the outer tube 12 advantageously may be insulated using fibrous or layered insulation, and/or evacuated to establish a thermal barrier. When the space is evacuated it is advantageous to provide the space with a getter material that absorbs gases that may migrate into the space during the life of the tubular apparatus. Such getter material is for example titanium and is advantageously provided around the inner tube when the inner tube conveys steam and is at an elevated temperature of from 204 to 371°C (400 to 700°F). The getter material is activated to improve its gas absorbing function. Gases which may migrate into the annular space include hydrogen formed by corrosion of the outer tube 12 or outgassed gases from the inner tube 14, such as nitrogen, carbon monoxide and oxygen.

**Claims**

1. A method of prestressing a tubular apparatus having at least one inner tube (14) positioned within an outer tube (12) and connected to the outer tube at at least two spaced locations along the length of the tubular apparatus, the method comprising reducing the diameter of the outer tube (12) so as permanently to elongate the outer tube while elastically stressing the inner tube (14) whereby a tensile prestress is applied to the inner tube (14) and a compressive prestress is applied to the outer tube (12).

2. A method of manufacturing a tubular apparatus having prestressed inner and outer tubes (14, 12), the method comprising:
positioning the inner tube (14) within the outer tube (12);
connecting the inner tube (14) to the outer tube (12) at at least two spaced locations along the length of the inner and outer tubes; and
mechanically reducing an outer diameter of the outer tube (12) so as permanently to elongate the outer tube while elastically stressing the inner tube (14) whereby the inner tube is prestressed with respect to the outer tube (12).

3. A method according to claim 1 or claim 2, including reducing the diameter of the outer tube (12) by cold working the outer wall using a drawbench, a roll extrusion machine, a swaging means, a roll sinking means, or a tube reducer.

4. A method according to claim 1, including reducing the diameter of the outer tube (12) by applying stress in a radially inward direction to the outer tube to exceed the yield point of the outer tube.

5. A method of manufacturing a prestressed tubular apparatus having at least one inner tube (14) positioned within an outer tube (12), the method comprising connecting the inner tube (14) to the outer tube (12) at at least two locations spaced along the length of the tubes, and, while the tubes are connected, permanently elongating the inner tube (14) while elastically stressing the outer tube (12) whereby a compressive prestress is applied to the inner tube and a tensile prestress is applied to the outer tube.

6. A method of prestressing a tubular apparatus having at least one inner tube (14) positioned within an outer tube (12) and connected to the outer tube at at least two locations spaced along the length of the tubular apparatus, the method comprising increasing the diameter of the inner tube (14) so as permanently to shorten the inner tube whereby a tensile prestress is applied to the inner tube (14) and a compressive prestress is applied to the outer tube (12).

**Patentansprüche**

1. Verfahren zum Vorspannen einer rohrförmigen Vorrichtung mit mindestens einem inneren Rohr (14), welches innerhalb eines äußeren Rohres (12) angeordnet und mit diesem an mindestens zwei, im Abstand längs der rohrförmigen Vorrichtung angeordneten Orten verbunden ist, wobei der Durchmesser des äußeren Rohres (12) reduziert wird, um fortlaufend das äußere Rohr zu dehnen, während das innere Rohr (14) elastisch unter Spannung gesetzt wird, wodurch eine Zugvorspannung auf das innere Rohr (14) aufgebracht wird und eine Druckvorspannung auf das äußere Rohr (12) aufgebracht wird.

2. Verfahren zur Herstellung einer rohrförmigen Vorrichtung mit vorgespannten inneren und äußeren Rohren (14, 12), wobei:
das innere Rohr (14) innerhalb des äußeren Rohres (12) angeordnet wird;
das innere Rohr (14) an mindestens zwei im Abstand längs der inneren und äußeren Rohre angeordneten Stellen mit dem äußeren Rohr (12) verbunden wird; und
mechanisch ein Außendurchmesser des äußeren Rohres (12) verringert wird, um permanent das äußere Rohr zu dehnen, während das innere Rohr (14) elastisch unter Spannung gesetzt wird, wodurch das innere Rohr bezüglich des äußeren Rohres (12) unter Vorspannung gesetzt ist.

3. Verfahren nach Anspruch 1 oder Anspruch 2, wobei der Durchmesser des äußeren Rohres (12) durch kalte Bearbeitung der Außenwand verringert wird unter Verwendung einer Schleppzangenziehbank, einer Rollenextrusionsmaschine, eines Gesenkschmiedemittels, eines Rollensenkmittels oder einer Rohrreduziereinrichtung.

4. Verfahren nach Anspruch 1, wobei der Durchmesser des äußeren Rohres (12) dadurch verringert wird, daß das äußere Rohr in Richtung radial einwärts unter Spannung gesetzt wird, um die Fließgrenze des äußeren Rohres zu überschreiten.

5. Verfahren zur Herstellung einer vorgespannten rohrförmigen Vorrichtung mit mindestens einem inneren Rohr (14), welches innerhalb eines äußeren Rohres (12) angeordnet ist, wobei das innere Rohr (14) an mindestens zwei im Abstand längs der Rohre angeordneten Stellen mit dem äußeren Rohr (12) verbunden wird und während des Verbindens der Rohre permanent das innere Rohr (14) gedehnt wird, während das äußere Rohr (12) elastisch unter Spannung gesetzt wird, wodurch eine Druckvorspannung auf das innere Rohr aufgebracht wird und eine Zugvorspannung auf das äußere Rohr aufgebracht wird.

6. Verfahren zum Vorspannen einer rohrförmigen Vorrichtung mit mindestens einem inneren Rohr (14), welches innerhalb eines äußeren Rohres (12) angeordnet wird und mit dem äußeren Rohr an mindestens zwei im Abstand längs der rohrförmigen Vorrichtung angeordneten Stellen mit dem äußeren Rohr verbunden wird, wobei der Durchmesser des inneren Rohres (14) erhöht wird, um permanent des innere Rohr zu verkürzen, wodurch eine Zugvorspannung auf das innere Rohr (14) aufgebracht wird und eine Druckvorspannung auf das äußere Rohr (12) aufgebracht wird.

**Revendications**

1. Procédé de précontrainte de dispositif tubulaire comportant au moins un tube intérieur (14) placé dans un tube extérieur (12) et relié au tube extérieur en au moins deux endroits espacés sur la longueur du dispositif tubulaire, le procédé comprenant la réduction du diamètre du tube extérieur (12) opérée de façon à provoquer l'allongement permanent du tube extérieur avec mise sous contrainte élastique du tube intérieur (14) de sorte qu'une précontrainte de traction s'applique au tube intérieur (14) et qu'une précontrainte de compression s'applique au tube extérieur (12).

2. Procédé de fabrication d'un dispositif tubulaire comportant des tubes intérieur et extérieur (14, 12) précontraints, le procédé comprenant:

la mise en place du tube intérieur (14) dans le tube extérieur (12);

le raccordement du tube intérieur (14) au tube extérieur (12) en au moins deux endroits espacés sur la longueur des tubes intérieur et extérieur; et

la réduction mécanique du diamètre extérieur du tube extérieur (12) opérée de façon à provoquer un allongement permanent du tube extérieur tout en mettant le tube intérieur (14) sous contrainte élastique de sorte que le tube intérieur se trouve sous précontrainte par rapport au tube extérieur (12).

3. Procédé selon la revendication 1 ou 2, comportant la réduction du diamètre du tube extérieur (12) par travail à froid de la paroi extérieure opéré à l'aide d'un banc l'étirage, d'une machine d'extrusion à galets, d'un moyen de rétreinte, d'un moyen de refoulement à galets ou d'une machine à réduire les tubes.

4. Procédé selon la revendication 1, comportant la réduction du diamètre du tube extérieur (12) par application radialement vers l'intérieur un tube extérieur d'une contrainte dépassant la limite élastique du tube extérieur.

5. Procédé de fabrication de dispositif tubulaire précontraint comportant au moins un tube intérieur (14) placé à l'intérieur d'un tube extérieur (12), le procédé comprenant le raccordement du tube intérieur (14) au tube extérieur (12) en au moins deux endroits espacés sur la longueur des tubes et, pendant que les tubes sont raccordés, un allongement permanent du tube intérieur (14) avec mise du tube extérieur (12) sous contrainte élastique de sorte qu'une précontrainte de compression s'applique au tube intérieur et qu'une précontrainte de traction s'applique au tube extérieur.

6. Procédé de précontrainte d'un dispositif tubulaire comportant au moins un tube intérieur (14) placé à l'intérieur d'un tube extérieur (12) et relié au tube extérieur en au moins deux endroits espacés sur la longueur du dispositif tubulaire, le procédé comprenant une augmentation du diamètre du tube intérieur (14) opérée de façon à provoquer un raccourcissement permanent du tube intérieur de sorte qu'une précontrainte de traction s'applique au tube intérieur (14) et qu'une précontrainte de compression s'applique au tube extérieur (12).

FIG. 1

FIG. 2

FIG. 3

FIG. 5

FIG. 4

DIE

GRIP